Europäisches Patentamt

European Patent Office

Office européen des brevets

(19)

(11) Veröffentlichungsnummer : **0 126 243**
**B1**

(12) **EUROPÄISCHE PATENTSCHRIFT**

(45) Veröffentlichungstag der Patentschrift :
**11.11.87**

(21) Anmeldenummer : **84103405.1**

(22) Anmeldetag : **22.12.80**

(60) Veröffentlichungsnummer der früheren Anmeldung
nach Art. 76 EPÜ : **0035599**

(51) Int. Cl.⁴ : **H 02 M   7/537**

(54) **Schaltungsanordnung zum transformatorischen Ansteuern eines Schalttransistors.**

(30) Priorität : **07.03.80 DE 3008716**

(43) Veröffentlichungstag der Anmeldung :
**28.11.84 Patentblatt 84/48**

(45) Bekanntmachung des Hinweises auf die Patenterteilung : **11.11.87 Patentblatt 87/46**

(84) Benannte Vertragsstaaten :
**BE DE FR GB IT**

(56) Entgegenhaltungen :
**DE-A- 2 017 659**
**DE-A- 2 358 322**
**DE-B- 2 603 174**

(73) Patentinhaber : **ANT Nachrichtentechnik GmbH**
**Gerberstrasse 33**
**D-7150 Backnang (DE)**

(72) Erfinder : **Grünsch, Eckhardt**
**Im Blütengarten 14**
**D-7151 Allmersbach im Tal (DE)**
Erfinder : **Wochele, Günter**
**Theodor-Heuss-Strasse 45**
**D-7158 Sulzbach (DE)**

## Beschreibung

Die Erfindung betrifft eine Schaltungsanordnung gemäß dem Oberbegriff des Patentanspruchs 1. Eine solche Anordnung ist bekannt aus DE-B-2 603 174.

Bei transformatorischer Ansteuerung eines Schalttransistors mittels eines Übertragers dessen Primärwicklung im Stromkreis des Schalttransistors liegt und zur Stommitkopplung dient (DE-B-2 603 174), ergibt sich das Problem des unkontrollierten Arbeitens des Gleichspannungswandlers bei fehlender oder zu kleiner Speisespannung der den Schalttransistor steuernden Steuerschaltlogik.

Der Erfindung liegt daher die Aufgabe zugrunde ein sicheres Ein- und Ausschalten des Schalttransistors bei einer Schaltungsanordnung gemäß dem Oberbegriff des Patentanspruchs auch bei zu kleiner oder gar fehlender Speisespannung der den Schalttransistor steuernden Steuerschaltlogik zu gewährleisten. Diese Aufgabe wird durch die kennzeichnenden Merkmale des Patentanspruchs gelöst.

Bei der erfindungsgemäßen Schaltungsanordnung wird in der zur Rückkopplung dienenden Primärwicklung beim Schließen des Schalters, der die Eingangsspannung mit dem Gleichspannungswandler verbindet, ein Störimpuls gebildet durch parasitäre Kapazitäten. Dieser Störimpuls wird mittels des Übertragers transformiert und erzeugt an der ersten Sekundärwicklung durch geeignete Dimensionierung der Steuerstufe eine Spannung, die nicht ausreicht, um der Schalttransistor in die Durchlaßphase zu steuern.

Die Erfindung wird nun anhand der Schaltungsanordnung gemäß der Figur näher erläutert.

Wie die Figur zeigt, liegt die Eingangsspannungsquelle Ue parallel zur Serienschaltung der Primärwicklung WP des Leistungstransformators Tr, der Primärwicklung WI des Übertragers und der Schaltstrecke des Schalttransistors TS. Die Basis-Emitterstrecke des Schalttransistors TS ist durch einen Widerstand überbrückt, zu dem die Serienschaltung, bestehend aus erster Sekundärwicklung WII und Kondensator C3, parallel liegt.

Wenn der Steuertransistor Ts2 sperrt, gibt der Übertrager seine gespeicherte Energie über die erste Sekundärwicklung WII auf den Schalttransistor TS ab, der dann leitend wird. Da der Übertrager, bestehend aus der Primärwicklung WI, erster Sekundärwicklung WII und zweiter Sekundärwicklung WIII, nun als Stromwandler arbeitet, fließt ein dem Übersetzungsverhältnis entsprechender Teil des Kollektorstromes von TS als Bassistrom durch die Wicklung WII des Übertragers. Wenn von der Steuerschaltlogik das Signal zum Abschalten des Schalttransistors TS kommt, wird der Steuertransistor Ts2 leitend und der Übertrager über die Wicklung WIII kurzgeschlossen. Der Kurzschluß wird transformiert, d. h. an den übrigen Wicklungen steht nur noch eine sehr kleine Spannung an. Da jetzt kein Basistrom mehr fließt, sperrt der Schalttransistor TS, wobei die Ladungsträger durch den Kondensator C3 aus der Basis-Emitterzone des Schalttransistors TS ausgeräumt werden. Nach dem Ausräumen beginnt die Energieaufnahme des Übertragers über die weitere Übertragerwicklung WIV. Parallel zur Primärwicklung WP des Leistungsübertragers Tr mit Sekundärwicklung WS liegt immer eine parasitäre Kapazität Cp, die z. B. durch Wickelkapazitäten oder Kapazitäten zur Funkentstörung zustandekommt.

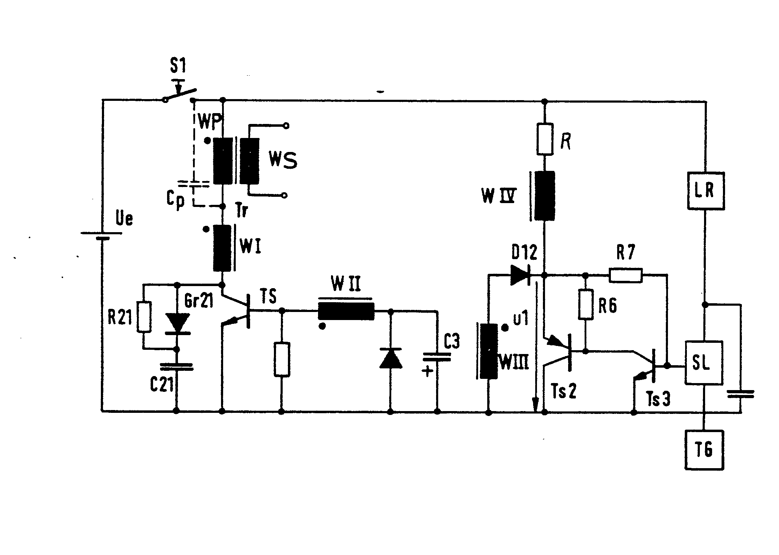

Die Beschaltung R21, Gr21, C21 schützt den Schalttransistor TS geger Spannungsspitzen. Diese Schutzschaltung ist bekannt aus Schaltnetzteile, J. Wüstehube, Expert Verlag, Grafenau, 1979, Seite 81, Bild 2.23. Beim Schließen des Schalters S1 fließt nun über den Kondensator Cp, die Primärwicklung WI des Übertragers, die Diode Gr21 und den Kondensator C21 ein Stromimpuls. Dieser Stromimpuls wird transformiert und erzeugt in der ersten Sekundärwicklung WII einen dem Übersetzungsverhältnis entsprechenden Strom, der den Schalttransistor TS leitend steuert. Durch die Kollektorstromrückkopplung bleibt der Schalttransistor TS leitend, und zwar so lange, bis der Steuertransistor Ts2 leitend wird und über die zweite Sekundärwicklung WIII den Übertrager und damit die Ansteuerung des Schalttransistors TS kurzschließt.

Da die Eingangsspannung Ue sich oftmals in relativ weiten Bereichen ändern kann und die Spannung für die Steuerschaltlogik SL aber stabil gehalten werden soll, wird die Steuerschaltlogik SL vorzugsweise von einem Längsregler LR (Verlustregler) gespeist. Dies hat jedoch zur Folge, daß nach Anlegen der Eingangsspannung die Speisespannung für die Steuerschaltung nur relativ langsam ansteigen kann.

Um bei zu kleiner Speisespannung der Steuerschaltlogik SL ein unkontrolliertes Arbeiten des Gleichspannungswandlers zu verhindern, wurde vorgeschlagen, bei zu kleiner Speisespannung der Steuerschaltlogik den Steuertransistor Ts2 dauernd leitend zu halten und dadurch den Schalttransistor TS zu sperren.

Dieser Schutz versagt jedoch so lange, bis nach Anlegen der Eingangsspannung Ue die Speisespannung für die Steuerschaltlogik SL auf einen Wert angestiegen ist, der das Ansteuern des Steuertransistors Ts2 ermöglicht. Das heißt also, daß nach Anlegen der Eingangsspannung der Steuertransistor Ts2 erst nach einer bestimmten Verzögerungszeit leitend werden und damit den Schalttransistor TS sperren kann.

Für diese Zeit bleibt der durch einen Störstromimpuls eingeschaltete Schalttransistor TS leitend. Bei längeren Verzögerungszeiten kann nach Anlegen der Eingangsspannung Ue der Kollektorstrom des Schalttransistors TS auf unzulässig hohe Werte ansteigen. Bei zu langen Verzögerungszeiten kommt der Leistungsübertrager Tr in die Sättigung, was zur Zerstörung des Schalttransistors TS führt.

Um nun zu verhindern, daß bei zu geringer oder gar fehlender Speisespannung für die Steuerschaltlogik SL der Schalttransistor TS angesteuert werden kann, wurde die Steuerstufe bestehend aus zweiter Sekundärwicklung WIII, Diode D12, Steuertransistor Ts2 als Schutzschaltung ausgebildet. Dabei wurde der Steuertransistor Ts2 durch eine Schaltung, bestehend aus den Transistoren Ts2, Ts3, den Widerständen R6 und R7 ersetzt. Bei Ansteuerung durch die Steuerschaltlogik stellt diese Schaltung einen einfachen Schalter dar und wirkt bei fehlender Ansteuerung durch die Steuerschaltlogik wie ein spannungsgesteuerter Widerstand, der mit steigender Spannung u1 niederohmiger wird.

Beim Schließen des Schalters S1 fließt nun ein Störstromimpuls durch die Primärwicklung WI des Übertragers. Dieser Störstromimpuls wird transformiert und erzeugt an der noch als spannungsgesteuerter Widerstand wirkenden Schaltung einen Spannungsabfall u1. Die Spannung, die dabei an der zweiten Sekundärwicklung WIII ansteht, wird transformiert und erzeugt an der ersten Sekundärwicklung WII eine dem Übersetzungsverhältnis entsprechend kleine Spannung. Der Widerstand R7 ist so dimensioniert, daß durch den transformierten Störstromimpuls nur so eine Spannung u1 erzeugt werden kann, bei der gewährleistet ist, daß die transformierte Spannung an der ersten Sekundärwicklung WII so klein bleibt, daß der Schalttransistor TS nicht angesteuert werden kann.

## Patentanspruch

Schaltungsanordnung zum transformatorischen Ansteuern eines als Stellglied arbeitenden Schalttransistors (TS) eines Gleichspannungswandlers mit einem Übertrager, der eine Primärwicklung (WI) und zwei Sekundärwicklungen aufweist, wobei durch einen Taktgenerator (TG) mit Steuerschaltlogik (SL) Beginn und Ende der Durchflußphase des über den Übertrager angesteuerten Schalttransistors (TS) festgelegt werden und wobei die zur Rückkopplung dienende Primärwicklung (WI) des Übertragers im Stromkreis des Schalttransistors (TS) liegt und in einer ersten Sekundärwicklung (WII) der Basisstrom für den Schalttransistor (TS) erzeugt wird, während die zweite Sekundärwicklung (WIII) mit einem Steuertransistor (Ts2), und einer Diode (D12), die Bestandteil einer Steuerstufe sind, derart verbunden ist, daß die zweite Sekundärwicklung (WIII) zur Beendigung der Durchflußphase des Schalttransistors (TS) kurzschließbar ist, dadurch gekennzeichnet, daß eine weitere, von der Eingangsspannung des Gleichspannungswandlers gespeiste Übertragerwicklung (WIV) vorgesehen ist, über die im Sperrzustand des Schalttransistors (TS) ein Energieaufnahmestrom fließt, der nach Erreichen einer zur nachfolgenden Aussteuerung des Schalttransistors (TS) erforderlichen Energie durch einen Widerstand (R) begrenzt wird, wobei die aufgenommene Energie bis zum Einschalten des Schalttransistors (TS) im Übertragerkern gespeichert wird, daß der Steuertransistor (Ts2) der Steuerstufe zwischen Basis und Emitter einen Widerstand (R6) aufweist, daß die Basis letzteren mit dem Kollektor eines weiteren Transistors (Ts3) verbunden ist, daß die Basis des weiteren Transistors (Ts3) sowohl mit einem Ausgang der Steuerschaltlogik (SL) als auch über einen weiteren Widerstand (R7) mit dem Kollektor des Steuertransistors (Ts2) verbunden ist und daß der Kollektor der Steuertransistors (Ts2) mit dem Emitter des weiteren Transistors (Ts3) verbunden ist.

## Claim

Circuit arrangement for the actuation, by way of a transformer, of a switching transistor (TS) operating as a setting member in a direct voltage converter, the arrangement comprising a transformer having a primary winding (WI) and two secondary windings, a clock pulse generator (TG) equipped with a control switching logic element (SL) for determining the beginning and end of the conductive phase of the switching transistor (TS) which is actuated via the transformer with the primary winding (WI) of the transformer which serves to provide the feedback connection lying in the circuit of the switching transistor (TS) current and the base current for the switching transistor (TS) is generated in a first secondary winding (WII) while the second secondary winding (WIII) is connected with a control transistor (Ts2) and a diode (D12), both components of a control stage, in such a manner that the second secondary winding (WIII) can be short-circuited to terminate the conductive phase of the switching transistor (TS), characterized in that a further transformer winding (WIV) is provided which is fed by the input voltage of the direct voltage converter and, when the switching transistor (TS) is in the blocked state, an energy pick-up current flows through said further transformer winding, with said energy pick-up current being limited by a resistor (R) once the energy required to subsequently actuate the switching transistor (TS) has been reached and the picked up energy is stored in the transformer core until the switching transistor (TS) is turned on ; the control transistor (Ts2) of the control stage is provided with a resistor (R6) between its base and its emitter ; the base of said control transistor is connected with the collector of a further transistor (Ts3) ; the base of said further transistor (Ts3) is connected with an output of the control switching logic element (SL) as well as, via a further resistor (R7), with the collector of the control transistor (Ts2) ; and the collector of the control transistor (Ts2) is connected with the emitter of said further transistor (Ts3).

## Revendication

Montage pour l'amorçage par transformateur d'un transistor de commutation (TS) fonctionnant en organe de réglage d'un convertisseur de tension continue, avec un transformateur comportant un enroulement primaire (WI) et deux enroulements secondaires, dans lequel une horloge (TG) à logique de commande (SL) fixe le début et la fin de la phase passante du transistor de commutation (TS) amorcé par le transformateur, l'enroulement primaire (WI) du transformateur assurant la réaction est inséré dans le circuit du transistor de commutation (TS), le courant de base du transistor de commutation (TS) est produit dans un premier enroulement secondaire (WII) et le deuxième enroulement secondaire (WIII) est relié à un transistor de commande (Ts2) et à une diode (D12) faisant partie d'un étage de commande, de façon que le deuxième enroulement secondaire (WIII) soit court-circuité pour terminer la phase passante du transistor de commutation (TS), ledit montage étant caractérisé en ce qu'un autre transformateur de l'enroulement (WIV) alimenté par la tension d'entrée du convertisseur de tension continue est prévu et parcouru, dans l'état bloqué du transistor de commutation (TS), par un courant d'absorption d'énergie qui est limité par une résistance (R) quand l'énergie nécessaire à l'amorçage suivant du transistor de commutation (TS) est atteinte, l'énergie absorbée étant emmagasinée dans le noyau du transformateur jusqu'à la fermeture du transistor de commutation (TS) ; le transistor de commande (Ts2) de l'étage de commande comporte une résistance (R6) entre la base et l'émetteur ; la base dudit transistor de commande est reliée au collecteur d'un autre transistor (Ts3) ; la base du transistor (Ts3) est reliée à une sortie de la logique de commande (SL) et, par une autre résistance (R7), au collecteur du transistor de commande (Ts2) ; et le collecteur du transistor de commande (Ts2) est relié à l'émetteur de l'autre transistor (Ts3).